# FASCICULE DE BREVET EUROPEEN

(11) **EP 4 543 715 B1**
(45) Date de publication et mention de la délivrance du brevet: **29.07.2026**
(21) Numéro de dépôt: 23736413.8
(22) Date de dépôt: 07.06.2023
(51) Int. Cl.: B60R 19/52, B62D 25/08

(54) **MODULE STRUCTUREL A REGIONS FUSIBLES POUR VEHICULE AUTOMOBILE, ET VEHICULE AUTOMOBILE LE COMPORTANT**
STRUKTURMODUL MIT SCHMELZBAREN BEREICHEN FÜR EIN KRAFTFAHRZEUG UND KRAFTFAHRZEUG DAMIT
STRUCTURAL MODULE WITH FUSIBLE REGIONS FOR A MOTOR VEHICLE, AND MOTOR VEHICLE COMPRISING SAME

(30) Priorité: 27.06.2022 FR 2206407
(43) Date de publication de la demande: 30.04.2025
(73) Titulaire: Stellantis Auto SAS, 78300 Poissy (FR)
(72) Inventeur: LAMOURIC, Stephane, 78280 GUYANCOURT (FR); DUPONT, Laetitia, 25310 ROCHES LES BLAMONT (FR); PLUCHAUD, Eric, 25260 MONTENOIS (FR); RIVIERE, Claude, 78460 CHEVREUSE (FR); VERDIER, Francois, 92160 ANTONY (FR)
(74) Mandataire: BCIP
(86) Numéro de dépôt international: PCT/FR2023/050803
(87) Numéro de publication internationale: WO 2024/003479

(56) Documents cités:
- WO-A1-2016/193635
- JP-A- 2015 024 706

## Description

La présente invention se rapporte de manière générale à une structure frontale de véhicule automobile. Plus précisément, l'invention porte sur une structure de renfort d'armature avant de véhicule automobile.

Afin de limiter leurs coûts de réparation, certains véhicules peuvent être soumis à un test de collision, notamment un test de collision dit de réparabilité, centré sur la partie médiane du véhicule. Après le choc, un expert vérifie que le système de refroidissement, disposé derrière le pare-chocs, n'est pas endommagé. Si celui-ci est effectivement endommagé, l'essai a échoué. En effet, le coût de réparation du véhicule lorsque ce composant est endommagé s'en trouve significativement augmenté.

L'armature d'un pare-chocs a une certaine rigidité intrinsèque. Quand la longueur d'un véhicule augmente, la masse disposée en porte-à faux à l'avant du véhicule augmente en conséquence. Il peut alors s'avérer nécessaire d'ajouter un pied central sur le pare-chocs en partie médiane du véhicule, par exemple entre une poutre inférieure de pare-chocs et une traverse supérieure de la façade du véhicule, afin de garantir la rigidité du pare-chocs. Néanmoins, pour qu'un véhicule reste compatible avec le test de réparabilité mentionné ci-dessus, il peut être utile de limiter l'épaisseur de ce pied dans la direction longitudinale du véhicule. Il s'agit ainsi de développer un compromis entre une rigidité suffisante pour disposer d'une bonne tenue mécanique, et de petites dimensions.

Par ailleurs, avec la multiplication des équipements dans les véhicules, tel que des caméras, capteurs de proximité, radar, etc., en plus d'un certain nombre de cloisons, tel que les cloisons anti-recyclage empêchant le retour d'air chaud depuis l'arrière du compartiment frontal du véhicule, la zone derrière la peau de pare-chocs est de plus en plus encombrée. Le besoin de rigidité dans cette zone augmente alors encore. En partie médiane de l'avant du véhicule, l'ajout de ces équipements augmente la raideur et un aspect incompressible, dans l'axe longitudinal du véhicule, c'est-à-dire dans l'alignement d'un impacteur du test de collision, et du système de refroidissement du véhicule. JP2015024706A montre un module structurel selon le préambule de la revendication 1.

L'invention vise à proposer un module structurel avant permettant d'offrir une rigidité suffisante à la partie frontale du véhicule, tout en assurant, en cas de choc frontal, la sauvegarde du système de refroidissement disposé à l'arrière du pare-chocs.

Pour atteindre cet objectif, l'invention propose un module structurel pour partie frontale de véhicule automobile, avec les caractéristiques de la revendication 1, comportant un renfort sensiblement vertical prévu en une partie médiane selon une direction transversale du véhicule, le renfort comportant un pied de renfort. Dans le module structurel :
- le pied de renfort comporte une première partie formant caisson et une deuxième partie, la première partie et la deuxième partie étant solidaires l'une de l'autre, et,
- la deuxième partie est disposée en saillie sur une face arrière de la première partie et est destinée à être orientée sensiblement vers un arrière du véhicule selon une direction avant-arrière du véhicule dans une configuration du véhicule adaptée à la circulation, et
- une zone de jonction formant zone fusible est prévue entre la première partie et la deuxième partie, sur une périphérie de la deuxième partie, la zone de jonction comportant :
   -- au moins une première région d'épaisseur inférieure à 1 mm, de préférence inférieure à 0,5 mm, de préférence encore inférieure à 0,3 mm ; et,
   -- au moins une deuxième région d'épaisseur comprise entre 0,50 mm et 2 mm, de préférence entre 0,75 mm et 1,75 mm, de préférence encore d'épaisseur comprise entre 1 et 1,5 mm,
l'épaisseur de l'au moins une première région étant inférieure à l'épaisseur de l'au moins une deuxième région.

Avec une telle géométrie spécifique du pied de renfort de module structurel, le pied de renfort offre une bonne rigidité structurelle tout en présentant des éléments fusibles qui permettent d'en faciliter la casse et le compactage lors d'un choc frontal, et lors du contact qui en découle, de la deuxième partie avec les composants disposés longitudinalement à l'arrière du pied de renfort dans le véhicule, tels qu'une façade de refroidissement. Cela permet notamment de préserver la façade de refroidissement en cas de choc et de limiter des coûts de réparation induits.

En outre, une telle conformation de module structurel peut se faire sans surcoût dans la conception d'outillages de fabrication. Un tel module structurel peut être fabriqué de manière simple, par exemple en matière plastique.

Cette conformation de module structurel est facilement transposable d'un modèle de véhicule à un autre lors du développement de ceux-ci en bureau d'études. Une telle transposition de composants permet, de manière générale, de réduire le coût d'une gamme de véhicules, ce qui contribue à la satisfaction de la clientèle.

En outre, une telle structure peut d'une part être maintenue compacte dans une zone du véhicule particulièrement encombrée.

Avantageusement, dans le module structurel, la deuxième partie peut être configurée pour pénétrer au moins partiellement dans la première partie lorsque le véhicule subit un choc frontal.

Avantageusement, dans le module structurel, l'au moins une première région peut inclure au moins une région ajourée.

Avantageusement, un épaulement peut être formé en partie basse du caisson, l'épaulement présentant au moins une première région de la zone de jonction, l'épaulement étant configuré pour être disposé à l'avant d'un organe d'un pare-chocs selon la direction avant-arrière du véhicule et venir en contact avec ledit organe de pare-chocs lorsque le véhicule subit un choc frontal.

Un tel épaulement favorise la casse de la zone de jonction dans sa partie basse au cours du choc que peut subir le véhicule.

Avantageusement, la deuxième partie peut comporter au moins deux parois latérales et au moins une paroi de consolidation disposée entre les au moins deux parois latérales.

Avantageusement, le module structurel peut comporter trois parois de consolidation, lesdites parois de consolidation pouvant être disposées entre elles en forme de lettre Y.

Avantageusement, la deuxième partie peut comporter au moins une arête supérieure, l'au moins une arête étant configurée pour être inclinée entre 15° et 45° depuis un axe avant-arrière du véhicule, de préférence entre 20 et 35°, de préférence encore entre 25 et 30°.

Avantageusement, au moins une des parois latérales peut s'étendre entre la première partie formant caisson et une extrémité arrondie de la deuxième partie, opposée à la première partie.

Un autre objet de l'invention concerne un véhicule automobile selon la revendication 9 comprenant un module structurel précité, pour partie frontale de véhicule automobile.

Avantageusement, le véhicule automobile peut comporter un module d'entrée d'air piloté comportant une section inclinée, inclinée vers le bas et l'arrière du véhicule, la section inclinée étant disposée en regard de la deuxième partie selon la direction avant-arrière du véhicule.

L'invention sera davantage détaillée par la description de modes de réalisation non limitatifs, et sur la base des figures annexées illustrant des variantes de l'invention, dans lesquelles :
- [Fig.1] est en vue en coupe d'une partie avant de véhicule, ainsi que d'un impacteur ;
- [Fig.2] est une vue en perspective d'un pied de renfort vertical d'un module frontal de la partie avant de véhicule de la Fig. 1 ;
- [Fig.3] montre une vue en coupe du pied de renfort selon le repère III-III de la Fig. 2.

Ci-après, en référence aux figures, les références d'orientation, à savoir un axe longitudinal X, ou avant-arrière, un axe transversal Y, ou gauche-droite, et un axe vertical Z, ou haut-bas, sont définies par rapport à trois directions d'un véhicule dans une disposition normale de celui-ci, c'est-à-dire apte à la circulation, du point de vue d'un utilisateur fictif installé dans le siège conducteur du véhicule 5. Ici, sur les figures, la référence X pointe vers l'avant par rapport au véhicule, la référence Y pointe ici vers la droite et la référence Z pointe vers le haut. De même, l'utilisation des termes gauche, droite, haut, bas, avant, arrière, s'entend du point de vue de ce même utilisateur fictif.

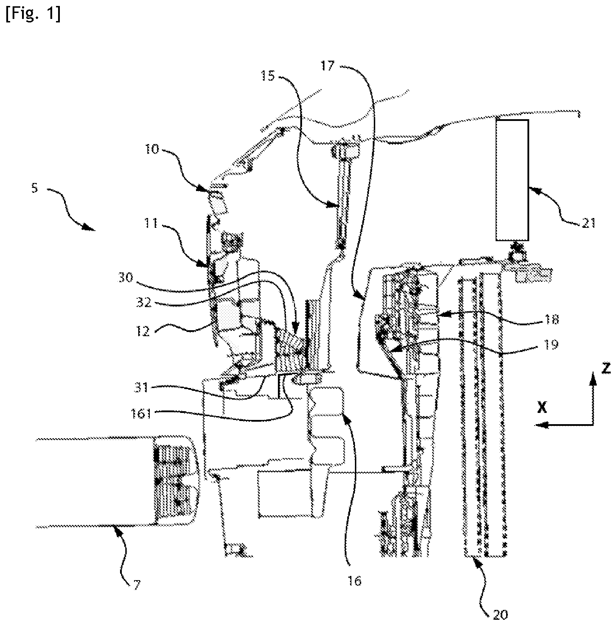

La Fig. 1 illustre une partie avant 10 d'un véhicule 5.

La partie avant 10 présente de l'avant à l'arrière ici un module structurel 11, dit module frontal, une armature de pare-chocs 15, une cloison déflectrice d'air 17, un cadre de module d'entrée d'air piloté 18 et une façade de refroidissement 20 et une traverse de façade 21.

L'armature de pare-chocs 15 comporte une poutre de pare-chocs 16 qui s'étend transversalement dans le véhicule 5, c'est-à-dire sensiblement parallèlement à l'axe transversal Y. La poutre de pare-chocs 16 présente ici une équerre 161 dont le rôle sera expliqué plus loin. L'équerre 161 est ici une partie en coin formée d'une partie sensiblement verticale et d'une partie sensiblement horizontale s'étendant vers l'arrière du véhicule 5 depuis le haut de la partie sensiblement verticale. L'équerre 161 est disposée en regard d'un épaulement 40 du pied de renfort 30, décrit plus loin.

Le module frontal 11 comporte un renfort 12, d'orientation sensiblement verticale, c'est-à-dire sensiblement selon l'axe vertical Z. Le renfort 12 comporte un pied de renfort 30, disposé généralement à l'avant et au-dessus de la poutre de pare-chocs 16 et reposant sur la poutre de pare-chocs 16 (non directement visible sur les figures). Le pied de renfort 30 est ici disposé de manière centrée dans la largeur du véhicule 5, c'est-à-dire selon l'axe transversal Y.

Par ailleurs, le cadre de module d'entrée d'air piloté 18 présente une section inclinée 19. La section inclinée 19 est disposée en partie avant du cadre 18 et est généralement orientée suivant une direction avant-haut vers arrière-bas. Selon la direction de l'axe longitudinal X du véhicule, la section inclinée 19 est disposée à l'arrière et en regard du pied de renfort 30.

La cloison déflectrice d'air 17 est également appelée cloison anti-recyclage et a pour rôle d'éviter le retour d'air chaud depuis l'arrière du moteur. La cloison déflectrice d'air 17 est ajourée en regard du pied de renfort 30 selon l'axe longitudinal X. Ainsi, le pied de renfort 30 fait face à la section inclinée 19.

La Fig. 1 illustre en outre un exemple d'impacteur 7, étranger au véhicule 5, ayant pour rôle de venir frapper le véhicule 5 lors du test de réparabilité mentionné en préambule. L'impacteur 7 est illustré dans une position et une orientation qu'il admet avant le choc avec le véhicule lors du test de réparabilité. Il est disposé en regard du module frontal 11 et de la poutre de pare-chocs 16. Le détail des effets du choc provoqué par l'impacteur 7 sur la partie avant 10 du véhicule 5 sera décrit plus loin.

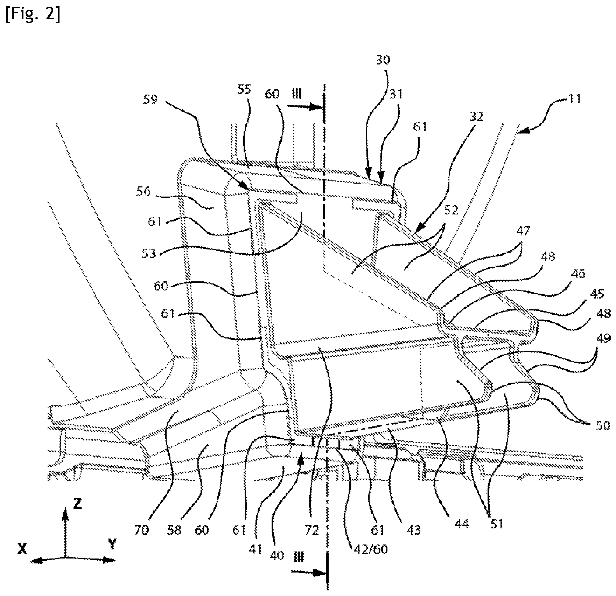

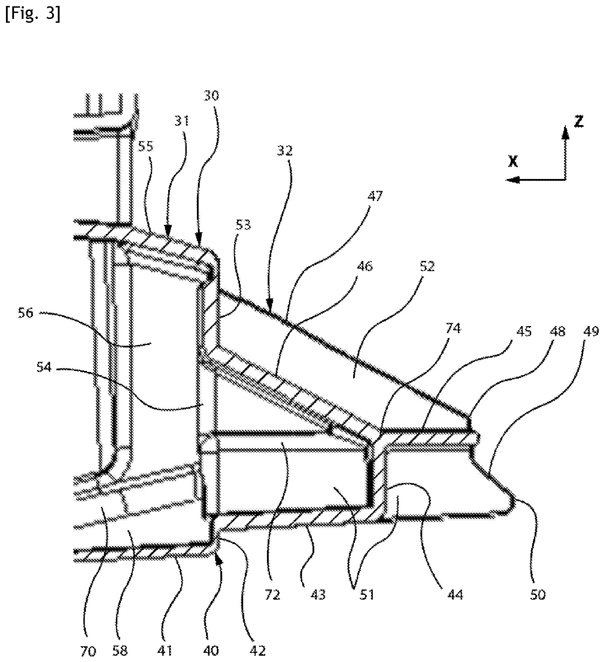

Les Fig. 2 et 3 représentent en vues détaillées le pied de renfort 30, précité, du renfort 12.

Le pied de renfort 30 comporte une première partie formant caisson 31, à l'avant dans la direction avant-arrière X du véhicule 5, et une deuxième partie 32, à l'arrière dans la direction avant-arrière X du véhicule 5, et également appelée partie effilée ci-après. Comme il ressortira des détails donnés ci-après, l'expression « partie effilée » est à comprendre comme signifiant que cette partie présente une section dont les dimensions se réduisent en direction de l'arrière du pied de renfort 30 et du véhicule 5.

Le caisson 31 est comporte une paroi inférieure 41, une paroi arrière 53, une paroi supérieure 55, deux parois latérales hautes 56 (gauche et droite) et deux parois latérales basses 58 (gauche et droite). Deux décrochements 70, respectivement du côté gauche et du côté droit dans le véhicule 5, relient de chaque côté respectif la paroi haute 56 à la paroi basse 58. La distance entre les parois hautes 56 est plus importante que la distance entre les parois basses 58. Ainsi, en partie haute, au-dessus des décrochements 70, le caisson 31 est plus large qu'en partie basse, en dessous des décrochements 70.

La paroi supérieure 55 est inclinée vers le bas et vers l'arrière du véhicule 5.

Un épaulement 40 est formé entre la paroi inférieure 41 et la partie basse 42, ou paroi basse 42, de la paroi arrière 53 du caisson 31. Cet épaulement 40 forme une marche prévue pour coopérer avec l'équerre 161 de la poutre de pare-chocs 16 lors d'un choc, ainsi que détaillé plus loin.

La partie effilée 32, quant à elle, comporte une paroi inférieure 43, deux parois latérales basses 51, deux parois latérales hautes 52 ainsi que trois parois de consolidation 44, 45 et 46 détaillées ci-après.

Deux décrochements 72, respectivement du côté gauche et du côté droit dans le véhicule 5, relient de chaque côté respectif la paroi haute 52 à la paroi basse 51. La distance entre les parois hautes 52 est plus importante que la distance entre les parois basses 51. Ainsi, en partie haute, au-dessus des décrochements 72, le caisson 31 est plus large qu'en partie basse, en dessous des décrochements 72. En outre, la distance entre les parois hautes 52 et la distance entre les paroi basses 51 se réduit en direction de l'arrière du véhicule 5.

Les parois de consolidation 44, 45 et 46 s'étendent entre les parois latérales 51 et entre les parois 52. Les parois 44, 45 et 46 sont disposées entre elles en forme de lettre Y. Les parois 44, 45 et 46 se rejoignent ainsi en une ligne de rencontre 74 s'étendant selon l'axe transversal Y (Fig. 3). De manière générale, les parois 44, 45 et 46 forment ensemble une structure rigidifiant la partie effilée 32. Cette disposition en forme de Y permet en particulier de conférer à la partie effilée une raideur à l'ensemble formé des trois parois 44, 45 et 46 dans l'ensemble des directions des axes X, Y et Z.

Dans le mode de réalisation illustré, la paroi 44 est une paroi verticale, c'est-à-dire s'étendant dans un plan défini par les axes Y et Z ; la paroi 45 est une paroi horizontale, c'est-à-dire s'étendant dans un plan défini par les axes X et Y ; la paroi 46 est une paroi inclinée, selon une direction générale descendante en direction de l'arrière du véhicule, et vers la ligne de rencontre 74 précitée. Les parois 44, 45 et 46 s'étendent par ailleurs chacune latéralement dans le véhicule 5, de sorte qu'elles appartiennent toutes à un plan respectif dans lequel s'étend un axe parallèle à l'axe Y.

La partie effilée 32 s'étend depuis la paroi arrière 53 du caisson 31. Plus précisément, la paroi inférieure 43, la paroi inclinée 46 et les parois latérales 51 et 52 s'étendent en saillie vers l'arrière du véhicule 5 depuis la paroi arrière 53 du caisson 31.

Les parois latérales 52 de la partie effilée 32 présentent chacune une arête supérieure 47. Les arêtes supérieures 47 s'étendent depuis la paroi arrière 53 du caisson 31, vers l'arrière et vers le bas du véhicule 5, jusqu'à une extrémité arrondie 48, ici opposée au caisson 31. En outre, les parois 52 se rapprochent l'une de l'autre en direction de l'arrière et du bas du véhicule 5, conférant à la partie arrière 52 son aspect effilé.

Un jour 54 est ménagé dans la paroi 53 entre les parois précitées (la paroi inférieure 43, la paroi inclinée 46 et les parois latérales 51 et 52). Grâce à l'inclinaison de la paroi 46 et à la convergence des parois latérales 51 et 52, ces parois forment surfaces de dépouille, facilitant la fabrication du pied de renfort 30.

En dessous de la paroi horizontale 45, les parois latérales basses 51 présentent chacune une arête supérieure 49 et une extrémité arrondie 50, ici opposée au caisson 31. Les parois latérales basses 51 forment ainsi conjointement un nez de guidage à l'arrière de la partie effilée 32.

Le pied de renfort 30 comporte encore une zone de jonction 59 formée sur la paroi arrière 53 du caisson 31. La zone de jonction 59 assure la liaison entre les parois 43, 51 et 52 précitées de la partie effilée 32 et le caisson 31 en lui-même. La zone de jonction 59 sert en outre de zone fusible en cas de choc, comme décrit plus loin.

La zone de jonction 59 est prévue ici pour former une ligne dessinant un contour périphérique à la partie effilée 32 sur la paroi arrière 53 du caisson 31.

La zone de jonction 59 comporte des premières régions 61, ou régions affaiblies, et des deuxièmes régions 60, ou régions pleines. Les régions affaiblies 61 et les régions pleines 60 sont réparties par alternance sur la longueur de la zone de jonction 59 (c'est-à-dire sur le pourtour de la partie effilée 32). L'épaisseur des régions affaiblies 61 est inférieure à l'épaisseur des régions pleines 60.

Les régions pleines 60, sont des régions de pleine épaisseur, conférant au pied de renfort sa rigidité en service normal du véhicule, c'est-à-dire en circulation et à l'arrêt, hors situation d'accident. L'épaisseur des régions pleines 60 est comprise entre 0,50 mm et 2 mm, de préférence entre 0,75 mm et 1,75 mm, de préférence encore d'épaisseur comprise entre 1 et 1,5 mm, par exemple égale à 1 mm.

L'épaisseur de la matière des régions affaiblies 61 est inférieure à 1 mm, de préférence inférieure à 0,5 mm, de préférence encore d'épaisseur inférieure à 0,3 mm, par exemple d'épaisseur égale à 0,1 mm.

De préférence, au moins une des régions affaiblies 61 est une région amincie, c'est-à-dire une région dont l'épaisseur de paroi est réduite sans être nulle par rapport aux régions environnantes, dont les régions pleines 60. Encore plus préférentiellement, toutes les régions affaiblies 61 sont des régions amincies

Dans un autre cas particulier, non illustré, au moins une des régions affaiblies 61 est une région ajourée, c'est-à-dire une découpe sans matière. Eventuellement, toutes les régions affaiblies 61 sont des régions ajourées.

Les régions amincies d'épaisseur non nulle sont cependant préférées aux régions ajourées dans la mesure où elles évitent que de l'air ne les traverse, les turbulences pouvant perturber le flux d'air et limiter l'arrivée d'air vers un condenseur que comporte la façade de refroidissement 20. Comme il apparaîtra ci-après, les régions affaiblies 61 sont destinées à provoquer la rupture au moins partielle de la zone de jonction 59, et notamment des régions pleines 60, sous l'effet d'un choc frontal que subit le véhicule 5.

En détail, les régions affaiblies 61 sont ici disposées en regard de chacun des angles formés par les parois 43, 51 et 52 depuis la paroi arrière 53 du caisson 31. En détail, sur un côté du pied de renfort 30, par exemple du côté gauche, qui est le côté faisant face au lecteur en Fig. 2 :
- une première région affaiblie 61 est disposée en forme de L en regard du point de rencontre de l'arête 47 avec la paroi 53,
- une deuxième région affaiblie 61 est disposée en regard du décrochement 70,
- une troisième région affaiblie 61 est disposée en forme de L en regard de l'angle que forment la paroi basse 51 et la paroi inférieure 43 avec la paroi 53. Par analogie, trois aux région affaiblies 61 sont prévues du côté droit du pied de renfort 30.

Les régions pleines 60 sont prévues de manière complémentaire avec les régions affaiblies 61, sur le pourtour de la partie effilée 32.

Lors d'un choc frontal subi par le véhicule 5, par exemple lors d'un accident, ou lors d'un choc provoqué au moyen de l'impacteur 7 de la Fig. 1 lors d'un test de réparabilité, le module frontal 11 est repoussé vers l'arrière du véhicule 5, avec le renfort 12 et le pied de renfort 30. Le terme choc frontal s'entend d'un choc comportant une composante selon une direction avant-arrière du véhicule 5. La configuration particulière du pied de renfort 30 lui permet alors de démontrer un comportement particulier.

En premier lieu, alors que le pied de renfort 30 recule par rapport au véhicule 5, l'épaulement 40 vient percuter l'équerre 161. L'équerre 161 s'oppose au recul du pied de renfort 30 et exerce alors une contrainte opposée au mouvement de recul sur la zone de jonction 59. Cette contrainte opposée s'exerce notamment au niveau de la paroi basse 42, c'est-à-dire à proximité immédiate du contact entre l'équerre 161 et l'épaulement 40. Ce contact provoque la fragilisation puis la rupture de la paroi basse 42 de la paroi arrière 53, sous la partie effilée 32. Cette rupture de la paroi basse 42 est ici favorisée par la présence des régions affaiblies 61 de part et d'autre de la paroi basse 42.

Le pied de renfort 30 poursuit son mouvement de recul et vient au contact de la section inclinée 19, c'est-à-dire sur le cadre de module d'entrée d'air piloté 18. La force résultante de l'inclinaison de la section inclinée 19 et de la force de recul du pied de renfort 30 est oblique, en direction du bas et de l'avant du véhicule 5. La partie effilée 32 est ainsi soumise à une contrainte vers le bas alors que le caisson 31 continue à reculer. Ces deux contraintes fragilisent le reste de la zone de jonction 59 (c'est-à-dire les régions 60 et 61 non précédemment rompues par le contact de l'épaulement 40 sur l'équerre 161). Les régions pleines 61, et le cas échéant les régions amincies dans la variante appropriée, sont amenées à rompre à mesure que la partie effilée 32 s'efface vers le bas. La partie effilée 32 peut alors pénétrer au moins partiellement dans le caisson 31 sous l'effet de la rupture de la zone de jonction 59, selon l'intensité du choc.

La structure décrite précédemment présente un certain nombre d'avantages, notamment d'offrir une bonne rigidité statique (c'est-à-dire lors d'un usage normal du véhicule, hors choc), tout en apportant une cinématique d'effacement intéressant lors d'un choc frontal que peut subir le véhicule 5 dans lequel cette structure de module est implémentée.

Comme détaillé précédemment, la zone de jonction 59 forme une zone fusible. En détail, la rupture de la zone de jonction peut se faire par étapes successives. Dans le mode de réalisation décrit ci-dessus, une ligne fusible inférieure, formée par la paroi basse 42, rompt dans un premier temps. Le reste de la zone de jonction forme une deuxième ligne fusible, sur le pourtour supérieur de la partie effilée 32, apte à céder dans un deuxième temps.

La disposition des parois 44, 45 et 46 entre elles en Y permet de conférer à la partie effilée 32 une bonne raideur intrinsèque pour garantir, d'une part, une bonne tenue du pied de renfort 30 de manière statique, et, d'autre part, pour permettre une bonne prédictibilité du mouvement d'effacement vers le bas de la partie effilée 32 en cas de choc frontal subi par le véhicule 5.

La forme arrondie des extrémités 48 et 50 permet d'assurer une progressivité à la trajectoire d'effacement vers le bas de la partie effilée 32 au fil de la rupture de la zone de jonction 59.

L'inclinaison des arêtes 47 permet de poursuivre le guidage de la partie effilée 32 vers le bas au cours du choc. L'inclinaison de chaque arête 47 est prévue entre 15° et 45°, de préférence entre 20 et 35°, de préférence encore entre 25 et 30°, par exemple égale à 27°.

## Revendications

1. Module structurel (11) pour partie frontale (10) de véhicule automobile (5), comportant un renfort (12) sensiblement vertical prévu en une partie médiane selon une direction transversale (Y) du véhicule (5), le renfort (12) comportant un pied de renfort (30),
- le pied de renfort (30) comportant une première partie formant caisson (31) et une deuxième partie (32), la première partie (31) et la deuxième partie (32) étant solidaires l'une de l'autre, et,
- la deuxième partie (32) est disposée en saillie sur une face arrière (53) de la première partie (31) et est destinée à être orientée sensiblement vers un arrière du véhicule (5) selon une direction avant-arrière (X) du véhicule (5) dans une configuration du véhicule (5) adaptée à la circulation, **caractérisé en ce que**
- une zone de jonction (59) formant zone fusible est prévue entre la première partie (31) et la deuxième partie (32), sur une périphérie de la deuxième partie (32), la zone de jonction (59) comportant :
-- au moins une première région (61) d'épaisseur inférieure à 1 mm, de préférence inférieure à 0,5 mm, de préférence encore d'épaisseur inférieure à 0,3 mm ; et,
-- au moins une deuxième région (60) d'épaisseur comprise entre 0,50 mm et 2 mm, de préférence entre 0,75 mm et 1,75 mm, de préférence encore d'épaisseur comprise entre 1 et 1,5 mm,
l'épaisseur de l'au moins une première région (61) étant inférieure à l'épaisseur de l'au moins une deuxième région (60).

2. Module structurel (11) selon la revendication 1, **caractérisé en ce que** la deuxième partie (32) est configurée pour pénétrer au moins partiellement dans la première partie (31) lorsque le véhicule (5) subit un choc frontal.

3. Module structurel (11) selon l'une quelconque des revendications 1 ou 2, **caractérisé en ce que** l'au moins une première région (61) inclut au moins une région ajourée.

4. Module structurel (11) selon l'une quelconque des revendications 1 à 3, **caractérisé en ce qu'**un épaulement (40) est formé en partie basse du caisson (31), l'épaulement (40) présentant au moins une première région (61) de la zone de jonction (59), l'épaulement (40) étant configuré pour être disposé à l'avant d'un organe (161) d'un pare-chocs (15, 16) selon la direction avant-arrière (X) du véhicule (5) et venir en contact avec ledit organe (161) de pare-chocs (15, 16) lorsque le véhicule (5) subit un choc frontal.

5. Module structurel (11) selon l'une quelconque des revendications 1 à 4, **caractérisé en ce que** la deuxième partie (32) comporte au moins deux parois latérales (51, 52) et au moins une paroi de consolidation (44, 45, 46) disposée entre les au moins deux parois latérales (51, 52).

6. Module structurel (11) selon la revendication 5, **caractérisé en ce que** le module structurel (11) comporte trois parois de consolidation (44, 45, 46), lesdites parois de consolidation (44, 45, 46) étant disposées entre elles en forme de lettre Y.

7. Module structurel (11) selon l'une quelconque des revendications 1 à 6, **caractérisé en ce que** la deuxième partie (32) comporte au moins une arête supérieure (47), l'au moins une arête (47) étant configurée pour être inclinée entre 15° et 45° depuis un axe avant-arrière (X) du véhicule (5), de préférence entre 20 et 35°, de préférence encore entre 25 et 30°.

8. Module structurel (11) selon l'une quelconque des revendications 5 à 7, **caractérisé en ce qu'**au moins une des parois latérales (51, 52) s'étend entre la première partie formant caisson (31) et une extrémité arrondie (48, 50) de la deuxième partie (32), opposée à la première partie (31).

9. Véhicule automobile (5) comprenant un module structurel (11) pour partie frontale (10) de véhicule automobile (5) selon l'une quelconque des revendications 1 à 8.

10. Véhicule automobile (5) selon la revendication 9, **caractérisé en ce qu'**il comporte un module d'entrée d'air piloté comportant une section inclinée (19), inclinée vers le bas et l'arrière du véhicule (5), la section inclinée (19) étant disposée en regard de la deuxième partie (32) selon la direction avant-arrière (X) du véhicule (5).

## Patentansprüche

1. Strukturmodul (11) für ein Frontteil (10) eines Kraftfahrzeuges (5) mit einer im Wesentlichen vertikalen Verstärkung (12), die an einem Mittelteil in einer Querrichtung (Y) des Fahrzeugs (5) vorgesehen ist, wobei die Verstärkung (12) einen Verstärkungsfuß (30) aufweist,
- der Stützfuß (30) einen ersten Kastenteil (31) und einen zweiten Teil (32) aufweist, wobei der erste Teil (31) und der zweite Teil (32) miteinander verbunden sind, und
- das zweite Teil (32) auf einer Rückseite (53) des ersten Teils (31) vorstehend angeordnet ist und dazu bestimmt ist, im Wesentlichen in Richtung eines hinteren Teils des Fahrzeugs (5) in einer Richtung von vorne nach hinten (X) des Fahrzeugs (5) in einer dem Verkehr angepassten Konfiguration des Fahrzeugs (5) ausgerichtet zu sein, **dadurch gekennzeichnet, dass**
- zwischen dem ersten Teil (31) und dem zweiten Teil (32) ist an einem Umfang des zweiten Teils (32) ein Verbindungsbereich (59) vorgesehen, der einen schmelzbaren Bereich bildet, wobei der Verbindungsbereich (59) folgendes aufweist:
- mindestens ein erster Bereich (61) mit einer Dicke von weniger als 1 mm, vorzugsweise weniger als 0,5 mm, vorzugsweise noch weniger als 0,3 mm; und
- mindestens ein zweiter Bereich (60) mit einer Dicke zwischen 0,50 mm und 2 mm, vorzugsweise zwischen 0,75 mm und 1,75 mm, vorzugsweise noch mit einer Dicke zwischen 1 mm und 1,5 mm,
Die Dicke des mindestens einen ersten Bereichs (61) ist kleiner als die Dicke des mindestens einen zweiten Bereichs (60).

2. Strukturmodul (11) nach Anspruch 1, **dadurch gekennzeichnet, dass** der zweite Teil (32) so ausgebildet ist, dass er zumindest teilweise in den ersten Teil (31) eindringt, wenn das Fahrzeug (5) einen Frontalaufprall erleidet.

3. Strukturmodul (11) nach einem der Ansprüche 1 oder 2, **dadurch gekennzeichnet, dass** der mindestens eine erste Bereich (61) mindestens einen durchbrochenen Bereich umfasst.

4. Strukturmodul (11) nach einem der Ansprüche 1 bis 3, **dadurch gekennzeichnet, dass** eine Schulter (40) im unteren Teil des Kastens (31) ausgebildet ist, wobei die Schulter (40) wenigstens einen ersten Bereich (61) des Verbindungsbereichs (59) aufweist, wobei die Schulter (40) so ausgebildet ist, dass sie vor einem Organ (161) eines Stoßfängers (15, 16) in der Vorwärts-Rückwärts-Richtung (X) des Fahrzeugs (5) angeordnet ist und mit diesem in Kontakt kommt (161) von Stoßfängern (15, 16) bei einem Frontalaufprall auf das Fahrzeug (5).

5. Strukturmodul (11) nach einem der Ansprüche 1 bis 4, **dadurch gekennzeichnet, dass** der zweite Teil (32) mindestens zwei Seitenwände (51, 52) und mindestens eine Verfestigungswand (44, 45, 46) aufweist, die zwischen den mindestens zwei Seitenwänden (51, 52) angeordnet ist.

6. Strukturmodul (11) nach Anspruch 5, **dadurch gekennzeichnet, dass** das Strukturmodul (11) drei Verfestigungswände (44, 45, 46) aufweist, wobei die Verfestigungswände (44, 45, 46) in Form eines Buchstaben Y zwischen sich angeordnet sind.

7. Strukturmodul (11) nach einem der Ansprüche 1 bis 6, **dadurch gekennzeichnet, dass** der zweite Teil (32) mindestens eine obere Kante (47) aufweist, wobei die mindestens eine Kante (47) so konfiguriert ist, dass sie von einer vorderen und hinteren Achse (X) des Fahrzeugs (5) aus zwischen 15° und 45°, vorzugsweise zwischen 20° und 35°, noch bevorzugter zwischen 25° und 30°, geneigt ist.

8. Strukturmodul (11) nach einem der Ansprüche 5 bis 7, **dadurch gekennzeichnet, dass** sich mindestens eine der Seitenwände (51, 52) zwischen dem ersten Kastenteil (31) und einem abgerundeten Ende (48, 50) des zweiten Teils (32), das dem ersten Teil (31) gegenüberliegt, erstreckt.

9. Kraftfahrzeug (5) mit einem Strukturmodul (11) für eine Vorderseite (10) eines Kraftfahrzeugs (5) nach einem der Ansprüche 1 bis 8.

10. Kraftfahrzeug (5) nach Anspruch 9, **dadurch gekennzeichnet, dass** es ein gesteuertes Lufteinlassmodul aufweist, das einen geneigten Abschnitt (19) aufweist, der nach unten und nach hinten geneigt ist, wobei der geneigte Abschnitt (19) dem zweiten Teil (32) in der Richtung von vorne nach hinten (X) des Fahrzeugs (5) gegenüberliegt.

## Claims

1. Structural module (11) for a front part (10) of a motor vehicle (5), comprising a substantially vertical reinforcement (12) provided in a median part along a transverse management (Y) of the vehicle (5), the reinforcement (12) comprising a reinforcing foot (30),
the reinforcing foot (30) comprising a first part forming a box (31) and a second part (32), the first part (31) and the second part (32) being integral with each other, and
the second part (32) is arranged protruding on a rear face (53) of the first part (31) and is intended to be orientated substantially towards a rear of the vehicle (5) according to a pre-rear management (X) of the vehicle (5) in a configuration of the vehicle (5) adapted to the traffic, wherein
- a junction zone (59) is provided between the first part (31) and the second part (32), on a periphery of the second part (32), the junction zone (59) comprising:
at least one first region (61) of thickness less than 1 mm, preferably less than 0.5 mm, more preferably of thickness less than 0.3 mm; and
at least one second region (60) with a thickness of between 0.50 mm and 2 mm, preferably between 0.75 mm and 1.75 mm, more preferably with a thickness of between 1 and 1.5 mm,
the thickness of the at least one first region (61) being less than the thickness of the at least one second region (60).

2. Structural module (11) according to claim 1, **characterised in that** the second part (32) is configured to penetrate at least partially into the first part (31) when the vehicle (5) is subjected to a frontal impact.

3. Structural module (11) according to either of Claims 1 and 2, wherein the at least one first region (61) includes at least one perforated region.

4. Structural module (11) according to any one of claims 1 to 3, **characterised in that** a shoulder (40) is formed in the lower part of the box (31), the shoulder (40) having at least a first region (61) of the junction zone (59), the shoulder (40) being configured to be arranged in front of a member (161) of a bumper (15, 16) along the front-rear management (X) of the vehicle (5) and to come into contact with said bumper member (161) (15, 16) when the vehicle (5) is subjected to a frontal impact.

5. Structural module (11) according to any one of claims 1 to 4, **characterised in that** the second part (32) comprises at least two side walls (51, 52) and at least one consolidation wall (44, 45, 46) arranged between the at least two side walls (51, 52).

6. Structural module (11) according to claim 5, **characterised in that** the structural module (11) comprises three consolidation walls (44, 45, 46), said consolidation walls (44, 45, 46) being arranged between them in the form of a letter Y.

7. Structural module (11) according to any one of claims 1 to 6, wherein the second part (32) comprises at least one upper edge (47), the at least one edge (47) being configured to be inclined between 15° and 45° from a front-rear axis (X) of the vehicle (5), preferably between 20° and 35°, more preferably between 25° and 30°.

8. Structural module (11) according to any one of claims 5 to 7, **characterised in that** at least one of the side walls (51, 52) extends between the first box-forming part (31) and a rounded end (48, 50) of the second part (32), opposite the first part (31).

9. Motor vehicle (5) comprising a structural module (11) for the front part (10) of a motor vehicle (5) according to any one of claims 1 to 8.

10. Motor vehicle (5) according to claim 9, **characterised in that** it comprises a controlled air entry module comprising an inclined section (19), inclined downwards and the rear of the vehicle (5), the inclined section (19) being arranged facing the second part (32) along the front-rear management (X) of the vehicle (5).
